# EUROPEAN PATENT APPLICATION

(11) **EP 4 711 169 A1**
(43) Date of publication of application: **18.03.2026**
(21) Application number: 25201044.2
(22) Date of filing: 09.09.2025
(51) Int. Cl.: B60K 11/04

(54) **ROAD VEHICLE WITH OVERLAPPABLE RADIATORS**

(30) Priority: 12.09.2024 IT 202400020311
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A road vehicle has a support frame (2); a passenger compartment (4); an outer body (5); and a pneumatic duct (8), which opens outwards through the outer body (5), and houses, on the inside, a cooling unit (12) provided with at least two radiators (13, 14) movable relative to one another between a first operating position, in which the radiators (13, 14) substantially overlap one another and the cooling unit (12) has a minimum exchange surface, and a second operating position, in which the radiators (13, 14) are substantially offset relative to one another and the cooling unit (12) has a maximum exchange surface.

## Description

### CROSS-REFERENCE TO RELATED APPLICATIONS

This patent application claims priority from Italian patent application no. 102024000020311 filed on September 12, 2024, the entire disclosure of which is incorporated herein by reference.

### TECHNICAL FIELD

The present invention relates to a road vehicle.

### BACKGROUND

More particularly, the present invention relates to a road vehicle comprising a support frame; a passenger compartment; an outer body; a propulsion system for controlling the movement of the road vehicle; and a pneumatic duct, which opens outwards through the outer body and houses, on the inside, a cooling unit.

The pneumatic duct is mounted at a front zone, a rear zone, and/or a lateral zone of the outer body, and the cooling unit is normally used in the cooling system of the propulsion system and/or in the air conditioning system of the passenger compartment using the air flow that hits the road vehicle while driving.

The cooling unit comprises at least one radiator mounted inside the pneumatic duct transverse to a flowing direction of the air flow along the pneumatic duct.

The radiator has an exchange surface designed and sized to ensure proper cooling when the road vehicle is moved forward by the propulsion system at a relatively low forward speed.

Known road vehicles of the type described above have a number of drawbacks mainly due the fact that, when the road vehicle is moved forward by the propulsion system at a relatively high forward speed, the radiator exchange surface is oversized, results in a relatively high aerodynamic loss, and therefore has a relatively low aerodynamic efficiency.

### SUMMARY

The object of the present invention is to provide a road vehicle that is free of the above-mentioned drawbacks and that is of simple and cheap construction.

A road vehicle as claimed in the appended claims is provided according to the present invention.

### BRIEF DESCRIPTION OF THE DRAWINGS

The present invention will now be described with reference to the attached drawings, which show a non-limiting embodiment thereof, wherein:
Figure 1 is a schematic perspective view, with parts removed for clarity, of a preferred embodiment of the road vehicle of the present invention;
Figure 2 is a schematic plan view, with parts removed for clarity, of a detail of the road vehicle in Figure 1; and
Figures 3 and 4 are two schematic perspective views, with parts removed for clarity, of a detail of Figure 2 shown in two different operating positions.

### DESCRIPTION OF EMBODIMENTS

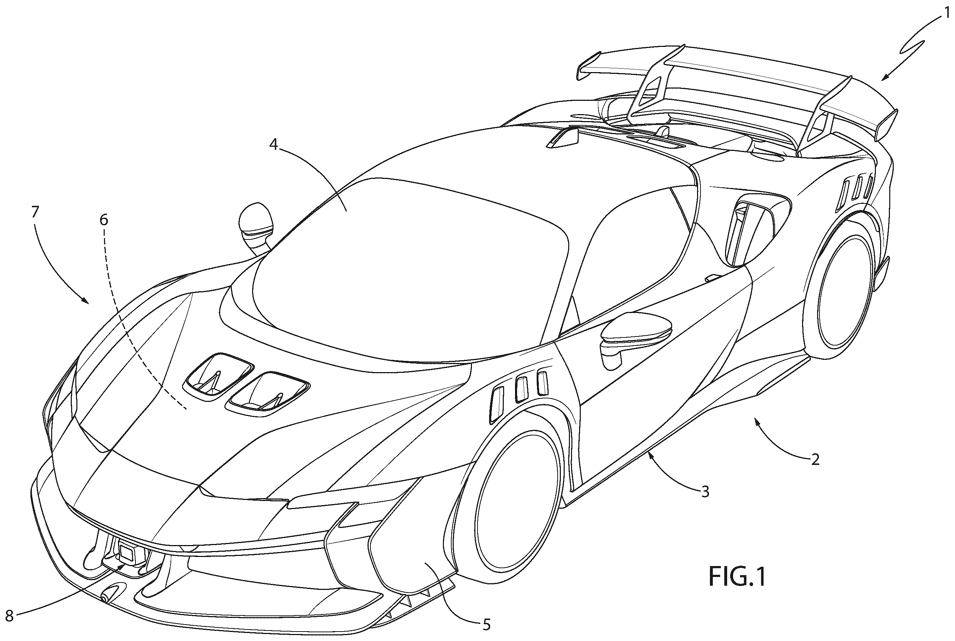

With reference to Figure 1, number 1 denotes, as a whole, a road vehicle comprising a support frame 2 defining at least part of a lower floor 3 of the vehicle 1; a passenger compartment 4 projecting upwards from the floor 3; an outer body 5 of the vehicle 1; and a propeller motor 6 housed, in this case, in a front compartment 7 of the vehicle 1.

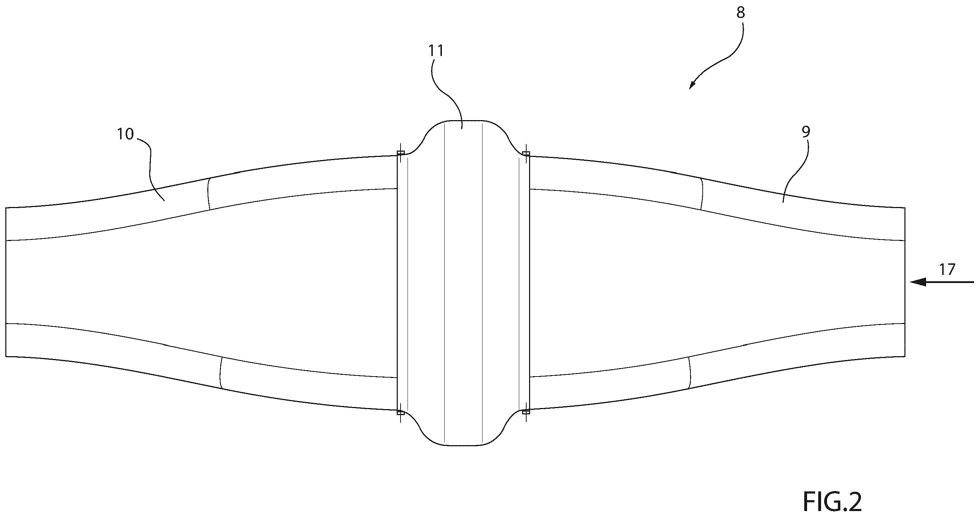

According to what is shown in Figures 2, 3, and 4, the vehicle 1 is provided with a pneumatic duct 8, which extends through the compartment 7, has a longitudinally open tubular shape, has, in addition, a substantially rectangular-shaped cross-section, and opens outwardly through the body 5 to receive the incoming air flow hitting the vehicle 1 while driving.

The duct 8 comprises an inlet segment 9, an outlet segment 10, and an annular-shaped coupling segment 11, which connects segments 9 and 10 to one another, and has a cross section greater than a cross section of segments 9 and 10.

The vehicle 1 is also provided with a cooling unit 12 housed inside the segment 11 of the duct 8 to cool, in this case, the motor 6.

The unit 12 comprises, in this case, two radiators 13, 14 having respective exchange surfaces 15, 16 that are substantially rectangular and perpendicular to a flowing direction 17 of the air flow along the duct 8, and a pair of rectilinear guides 18, which extend in a direction 19 transverse to the direction 17, and are fixed one to an upper inner face and the other to a lower inner face of the segment 11.

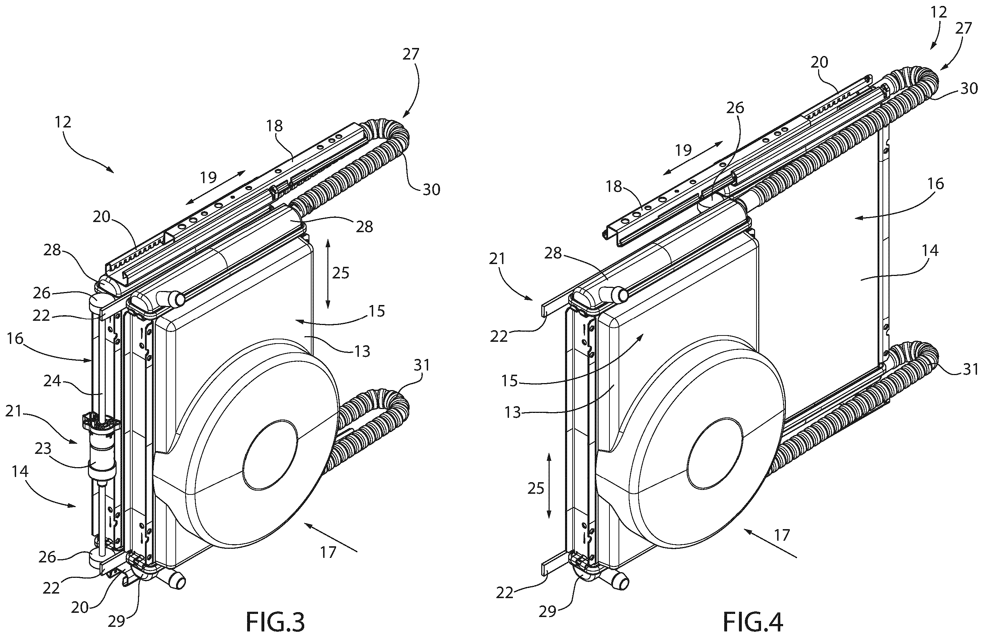

The radiator 13 is fixed within the duct 8, and the radiator 14 is provided with two slides 20 slidingly coupled to the guides 18 to allow the radiator 14 to move, relative to the radiator 13, in the direction 19 between a first operating position (Figure 3), in which the radiators 13, 14 substantially overlap one another and the unit 12 has a minimum exchange surface substantially equal to the exchange surface 15, 16 of a radiator 13, 14, and a second operating position (Figure 4), in which the radiators 13, 14 are substantially offset relative to one another and the unit 12 has a maximum exchange surface substantially equal to the sum of the surfaces 15, 16.

The radiator 14 is movable between the first operating position and the second operating position under the thrust of an actuating device 21.

The device 21 comprises, in this case, two racks 22 parallel to one another fixed along an upper edge and along a lower edge of the radiator 13 parallel to the direction 19; and an electric motor 23 fixed to the radiator 14 and having an output shaft 24, which extends in a direction 25 substantially orthogonal to the directions 17, 19, and is provided with two toothed wheels 26 mounted at the free ends of the shaft 24 and coupled with the racks 22.

The unit 12 further comprises a hydraulic circuit 27 to supply a coolant through the radiators 13, 14.

The circuit 27 comprises, for each radiator 13, 14, a respective inlet manifold 28 and a respective outlet manifold 29 mounted on the radiator 13, 14 parallel to the direction 19, and further comprises a first flexible duct 30 to connect the manifolds 28 to one another and a second flexible conduit 31 to connect the manifolds 29 to one another.

Obviously, according to variants not shown, the pneumatic duct 8 is mounted in a rear or side compartment of the vehicle 1.

The cooling unit 12 has certain advantages mainly resulting from the fact that:
when the vehicle 1 is moved forward by the propeller motor 6 at a relatively high forward speed, the radiators 13, 14 are moved to their first operating position and the unit 12 has the minimum exchange surface so as to ensure a relatively low aerodynamic loss and thus a relatively high aerodynamic efficiency; and
when vehicle 1 is moved forward by the propeller motor 6 at a relatively low forward speed, the radiators 13, 14 are moved to their second operating position and the unit 12 has the maximum exchange surface so as to ensure proper cooling of the motor 6 itself.

## Claims

1. A road vehicle comprising a support frame (2); a passenger compartment (4); an outer body (5); and a pneumatic duct (8), which opens outwards through the outer body (5) and houses, on the inside, a cooling unit (12); and **characterized in that** the cooling unit (12) comprises at least two radiators (13, 14), which are mounted inside the pneumatic duct (8) and are movable relative to one another between a first operating position, in which the radiators (13, 14) substantially overlap one another and the cooling unit (12) has a minimum exchange surface, and a second operating position, in which the radiators (13, 14) are substantially offset relative to one another and the cooling unit (12) has a maximum exchange surface.

2. The road vehicle according to claim 1, wherein the radiators (13, 14) can slide relative to one another between said first and second operating positions.

3. The road vehicle according to claim 1 or 2, wherein the radiators (13, 14) are substantially perpendicular to a flowing direction (17) of the air flow along the pneumatic duct (8).

4. The road vehicle according to any one of the preceding claims and further comprising an operating device (21) to move the radiators (13, 14) between said first and second operating positions.

5. The road vehicle according to claim 4, wherein the operating device (21) comprises at least one rack (22) mounted along a first radiator (13) transversely to a flowing direction (17) of the air flow along the pneumatic duct (8) and an electric motor (23) carried by a second radiator (14) and provided with an output shaft (24) coupled to the rack (22).

6. The road vehicle according to any one of the preceding claims and further comprising a hydraulic circuit (27) to feed a cooling liquid through the radiators (13, 14).

7. The vehicle according to claim 6, wherein the hydraulic circuit (27) comprises, for each radiator (13, 14), a respective inlet manifold (28) and a respective outlet manifold (29) and further comprises a first flexible duct (30) to connect the inlet manifolds (28) to one another and a second flexible duct (31) to connect the outlet manifolds (29) to one another.

8. The vehicle according to any one of the preceding claims, wherein the pneumatic duct (8) comprises an inlet segment (9), an outlet segment (10) and a coupling segment (11) to connect the inlet and outlet segments (9, 10) to one another; the cooling unit (12) being located between the inlet and outlet segments (9, 10) in the area of the coupling segment (11).
